# NEUE EUROPÄISCHE PATENTSCHRIFT

(11) **EP 2 044 916 B2**
(45) Veröffentlichungstag und Bekanntmachung des Hinweises auf die Entscheidung über den Einspruch: **09.12.2015**
(45) Hinweis auf die Patenterteilung: 20.06.2012
(21) Anmeldenummer: 08165613.4
(22) Anmeldetag: 01.10.2008
(51) Int. Cl.: A61G 3/06, B60P 1/43, B60R 3/02

(54) **Trittplattenvorrichtung**
Step plate device
Dispositif de marchepieds

(30) Priorität: 05.10.2007 DE 202007013970 U
(43) Veröffentlichungstag der Anmeldung: 08.04.2009
(73) Patentinhaber: Gebr. Bode GmbH & Co. KG, 34123 Kassel (DE)
(72) Erfinder: Böde, Ralf, 34590, Wabern (DE); Grimm, Holger, 36280, Oberaula (DE); Kircher, Werner, 34292, Ahnatal-Heckershausen (DE)
(74) Vertreter: Patentanwälte Bauer Vorberg Kayser

(56) Entgegenhaltungen:
- EP-A1- 1 800 640
- EP-A1- 2 044 916
- WO-A-98/06370
- DE-U1- 29 902 687
- US-A- 3 915 475
- US-B1- 6 325 397
- US-B1- 6 880 843
- US-B1- 7 261 357
- Hübner IL-Rampe

## Beschreibung

Die vorliegende Erfindung betrifft eine Trittplattenvorrichtung mit einer Trittplatte für einen Türeinstieg eines Personenbeförderungsfahrzeuges, wobei die Trittplatte aus einer Ruhestellung in eine Gebrauchsstellung und zurück bewegbar ist

Derartige Zustiegs- und Zufahrtshilfen werden bei Fahrzeugen zur Personenbeförderung, beispielsweise bei Bussen oder Schienenfahrzeugen des öffentlichen Nahverkehrs eingesetzt. Sie sind in vielfältiger Form bekannt und erleichtern den Ein- und Ausstieg dadurch, dass im Bereich von Haltestellen an den Fahrzeugen verschiebbar und meist auch verschwenkbar gelagerte Trittplatten ausgefahren werden. Trittplatten werden dabei zur Überbrückung von Spalten (beispielsweise bei Bahnsteigen) oder auch zum Höhenausgleich eingesetzt. Schließlich erleichtern oder ermöglichen sie Rollstuhlfahrern den Zugang in die Fahrzeuge. Nach Beendigung der Aus- und Einstiegsphase und eventuell nach dem Schließen der Fahrzeugtüren wird die Trittplatte wieder in ihre Ruhestellung zurückgebracht.

Neben motorisch ausfahrbaren Trittplatten sind ebenfalls manuell ein-/ausziehbare sowie klappbare Trittplatten bekannt. Im Bereich der Trittplatte ist bei fremdbetriebenen Zustiegshilfen ein Motor vorgesehen, der die Trittplatte aus ihrer Ruhestellung in die Gebrauchsstellung heraus- und wieder zurückfährt. Derartige motorisch betriebene Trittplatten sind beispielsweise in den Druckschriften DE 20 2007 000 912 U1, DE 20 2005 012 584 U1 und DE 20 2006 017 716 U1 beschreiben. WO 98/06370 A betrifft eine Trittplattenvorrichtung gemäß dem Oberbegriff des Anspruchs 1.

Wie auch diesen Druckschriften zu entnehmen ist, ist die begehbare Trittplatte meist seitlich an Führungsmitteln befestigt, über die sie linear ein- und ausgefahren werden kann. In der ausgefahrenen Endstellung ist meist ein Absenken der Trittplatte notwendig. Zu diesem Zweck ist am hinteren Ende der Trittplatte eine Auflagetraverse vorgesehen, die ebenfalls mit den Führungsmitteln in Verbindung steht. Die Trittplatte und die Auflagetraverse sind wiederum mit Hilfe eines Gelenkbandes, einem Scharnier, einem Kunststoffband oder ähnlichem miteinander verbunden. Diese "gelenkige" Verbindung zwischen der Auflagetraverse und der Trittplatte erlaubt das Absenken der Trittplatte auf den Untergrund, beispielsweise einen Bahnsteig, Bordstein oder auch die Fahrbahnoberfläche.

Die ausfahrbaren Trittplatten bestehen in der Regel aus einem widerstandsfähigen und starren, aber leichten Material und sind in der Regel mit einer rutschhemmenden Auflage versehen.

Der Antrieb der Trittplatte kann verschieden ausgeführt sein, z.B. durch seitliche Spindeln, welche neben dem Antrieb ebenfalls die Funktion der Führung übernehmen, oder auch durch einen zentralen Antrieb, welcher zusätzliche (z.B. seitliche) Führungsmittel erfordert. Weitere Antriebsmöglichkeiten sind ebenfalls realisiert, auf diese wird jedoch im Rahmen dieser Patentanmeldung nicht eingegangen.

Üblicherweise werden Trittplattenvorrichtungen als vollständige Einheit gefertigt und in dafür vorgesehenen Bauraum an den Fahrzeugen montiert. Unterhalb der Einstiegstüren ist hierzu meist eine Rahmenkonstruktion vorgesehen, an der die Trittplattenvorrichtung befestigt werden kann. Üblicherweise ist eine Fahrzeugquertraverse oder Auflagetraverse vorgesehen, auf der sich die Trittplattenvorrichtung und letztendlich auch die Trittplatte selbst abstützen.

Trittplattenvorrichtungen werden z. Zt. auf Basis von Bodenwannen hergestellt, die mit geeignetem Material ausgefüllt werden. Der Bodenbereich der Bodenwanne muss dabei massiv und formstabil ausgeführt sein, da er weitere innenliegende Bauteile (z.B. die ausfahrbare Trittplatte, notwendige Motoren usw.) tragen können muss.

Weiterhin ist eine Deckplatte vorgesehen, die die Bodenwanne nach oben, also in Richtung der Benutzer, abdeckt. Auch diese Deckplatte muss massiv und stabil ausgeführt sein, da auch sie die Last der Personen tragen muss. Die Deckplatte darf sich weder unter Last zu sehr elastisch durchbiegen, noch darf sie sich dauerhaft verformen. Dies ist auch deshalb wichtig, weil sich unterhalb der Deckplatte die ausfahrbare Trittplatte befindet, die durch eine durchgebogene Deckplatte blockiert werden könnte.

Insgesamt sind die Trittplattenvorrichtungen nach dem Stand der Technik also relativ aufwendig konstruiert und aufgebaut und weisen ein entsprechend hohes Eigengewicht auf.

Weiterhin besteht ein wesentlicher Nachteil bekannter Trittplattenvorrichtungen darin, dass diese für Wartungszwecke vollständig ausgebaut werden müssen. Ein Zugang zu den innenliegenden Bauteilen ist weder von der Deckplatte noch von der Bodenwanne her möglich.

Die Aufgabe der vorliegenden Erfindung besteht darin, eine Trittplattenvorrichtung zu schaffen, die kompakt und Platz sparend aufgebaut ist. Sie soll insbesondere ein möglichst geringes Eigengewicht aufweisen und einfach zu montieren und zu warten sein. Die oben genannten Nachteile des Standes der Technik sollen vermieden werden.

Erfindungsgemäß wird die Aufgabe durch eine Trittplattenvorrichtung mit einer Trittplatte für einen Türeinstieg eines Personenbeförderungsfahrzeuges, wobei die Trittplatte aus einer Ruhestellung in eine Gebrauchsstellung und zurück bewegbar ist, gelöst, bei der eine Deckplatte mit mindestens zwei Seitenprofilen vorgesehen ist, so dass die Trittplatte in der Ruhestellung unterhalb der Deckplatte und zwischen den Seitenprofilen angeordnet ist.

Die erfindungsgemäße Trittplattenvorrichtung besteht also nicht aus einer massiven Bodenwanne und einer stabilen Deckplatte, sondern es ist lediglich eine ausreichend tragfähige Deckplatte vorgesehen. Die notwendige Stabilität der Deckplatte wird auch über die Seitenprofile, vorzugsweise zwei Seitenteile und ein Rückteil erreicht. Die Seitenprofile, also die Seitenteile und das Rückteil stützen die Deckplatte und geben ihr somit die geforderte Steifigkeit. Dies ist insbesondere deshalb wichtig, weil die Deckplatte zwischen 400 kg/qm und 550 kg/qm tragen können muss, oftmals können die Anforderungen sogar höher sein. Grundsätzlich können die Seitenprofile auch durch nach oben stehende Seitenprofile einer Bodenplatte oder -wanne gebildet sein, auf denen sich die Deckplatte abstützt. Beispielsweise kann nur ein nach oben stehendes Seitenprofil, z.B. das Rückteil, vorgesehen sein, es können aber auch mehrere Seitenprofile die Deckplatte abstützen. Der Begriff Seitenprofil ist also im Sinne von einem der Seiten- oder Rückteile zu verstehen.

Durch die erfindungsgemäße Ausführung der Deckplatte kann auf die sonst übliche Bodenwanne vollständig verzichtet werden. Die unterhalb der Deckplatte befindlichen Bauteile wie beispielsweise die ausfahrbare Trittplatte, die dazugehörige Mechanik und auch der in der Regel vorgesehene Elektromotor können an der Deckplatte selbst oder an den Seitenteilen bzw. dem Rückteil befestigt werden. Es ist also nicht notwendig, hierfür die sonst übliche, massiv ausgebildete Bodenplatte der Bodenwanne vorzusehen. Die Trittplattenvorrichtung kann über die Seitenteile problemlos in den dafür vorgesehenen Bauraum am Fahrzeug montiert werden, auch kann sie sich auf der fahrzeugseitig meist vorhandenen Auflagetraverse abstützen.

Neben der Einsparung der mit der Bodenwanne verbundenen Kosten und der Reduzierung des Gewichts der Trittplattenvorrichtung besteht ein weiterer wesentlicher Vorteil darin, dass die ausfahrbare Trittplatte und die dazu gehörende Mechanik einschließlich des Antriebs im eingebauten Zustand von unten zugänglich sind. Für Wartungs- und Instandhaltungsarbeiten ist also in der Regel ein Ausbau der Trittplattenvorrichtung nicht mehr notwendig.

In einer besonders vorteilhaften Ausführungsvariante ist die Trittplattenvorrichtung bodenseitig mit einer Abdeckung versehen, so dass die Trittplatte in ihrer Ruhestellung zwischen der Deckplatte und der Abdeckung angeordnet ist. Diese Abdeckung schützt die innen liegenden Bauteile vor Umwelteinflüssen wie Verschmutzung und Beschädigungen beispielsweise durch Steinschlag. Für Instandhaltungs- oder Wartungsarbeiten muss lediglich diese Abdeckung abgenommen werden.

Die Deckplatte, die bodenseitige Abdeckung und auch die Trittplatte können aus sämtlichen geeigneten Materialien gefertigt sein, es bieten sich insbesondere Kunststoffe und Metalle an.

Die Trittplatte ist über seitlich angeordnete Führungselemente unmittelbar schwenkbar an seitlich verlaufenden Führungsmitteln befestigt. Auf die nachteiligen Zwischenmittel, die somit zwischen der Trittplatte und der sonst üblichen Auflagetraverse angeordnet sind, kann vollständig verzichtet werden. Entsprechend baut die gesamte Trittplattenvorrichtung in Ein-/Ausfahrrichtung kürzer, es werden weniger Bauteile benötigt und auch die Montage und Demontage ist einfacher durchzuführen.

Der Antrieb der Trittplatte erfolgt vorzugsweise über einen Elektromotor, der in einer besonders bevorzugten Ausführungsvariante die als Spindelmuttern ausgeführten Führungsmittel antreibt. Die Führungsmittel erstrecken sich jeweils durch eine Öffnung im zugehörigen Führungselement. Die Öffnungen weisen zu diesem Zweck ein Innengewinde auf, so dass eine Drehung der Spindelmutter zu einem Verfahren der Führungselemente und damit der Trittplatte führt. Alternativ kann auch eine zusätzliche Antriebswelle vorgesehen ist, die die Trittplatte antreibt; die Führungsmittel übertragen dann keine Kraft.

Die Führungselemente sind einander gegenüberliegend angeordnet und weisen einen Grundkörper mit der durchgehenden Öffnung für die Führungsmittel und einen Zapfenabschnitt, auf der sich im eingebauten Zustand der Trittplattenvorrichtung in jeweils eine Aufnahmeöffnung der Trittplatte hinein erstreckt. Der Zapfenabschnitt weist einen kreisförmigen Querschnitt auf, so dass die Trittplatte um die Zapfenabschnitte schwenkbar ist. In der vollständig ausgefahrenen Position liegt die Trittplatte nicht mehr auf dem Rahmen auf und kann sich aufgrund der Schwenkbarkeit um die Zapfenabschnitte nach unten absenken oder kann nach oben geschwenkt werden.

Dadurch, dass die Führungselemente auch um die Führungsmittel schwenkbar sind, ist die Trittplatte in gewissem Rahmen bewegbar. Dies hat den großen Vorteil, dass ein Versatz der Führungsmittel, der auch im Laufe der Nutzung entstehen kann, ausgeglichen wird, die Trittplatte verkantet sich beim Ein- und Ausfahren nicht. Auch sind die Ansprüche an die Fertigung der Bauteile hinsichtlich ihrer Abmessungen deutlich niedriger als bei bekannten Trittplattenausfahrvorrichtungen, was Kosten und Aufwand einspart.

Die Zapfenabschnitte können in den Aufnahmeöffnungen ein gewisses Spiel in ihrer Längsrichtung haben, was die Freiheitsgrade und die Bewegbarkeit der Trittplatte weiter erhöht. Weiterhin sind die Zapfenabschnitte entlang der in Längsachse der Zapfenabschnitte verlaufenden Achse Y-Y verschiebbar, wodurch eine Abweichung der Parallelität der Führungsmittel ausgeglichen werden kann. Laufen die Führungsmittel also nicht exakt parallel zueinander, sondern öffnen sie sich beispielsweise in Ausfahrrichtung, kann dies durch ein Verschieben der Zapfenabschnitte in den Aufnahmeöffnungen ausgeglichen werden.

Erfindungsgemäß können auch Hülsen vorgesehen sein, die in die Aufnahmeöffnungen einführbar sind und in die sich die Zapfenabschnitte erstrecken. Derartige Hülsen sind beispielsweise aus Kunststoff gefertigt und erleichtern die Bewegung des vorzugsweise aus Metall gefertigten Führungselementes in der Aufnahmeöffnung.

Die gelenkige Lagerung ist im Gegensatz zu einem Gelenkband oder Scharnier Schmutz und Feuchtigkeit weniger ausgesetzt, wodurch die gesamte Trittplattenvorrichtung eine lange Lebensdauer aufweist.

Die Aufnahmeöffnungen sind vorzugsweise am hinteren Ende der Trittplatte angeordnet, so dass beim Absenken der Trittplatte nur ein geringer Bereich übersteht. Alternativ ist aber je nach Anforderungsprofil auch eine Anordnung der Aufnahmeöffnungen an anderen Stellen möglich.

Anhand der nachfolgenden Figuren wird die Erfindung näher erläutert. Diese sind nur beispielhaft zu verstehen und sollen den Umfang der Erfindung nicht beschränken. Es zeigen:
- Figur 1:: Eine Trittplattenvorrichtung in perspektivischer Darstellung im eingebauten Zustand, mit ausgefahrener Trittplatte und abgenommener bodenseitiger Abdeckung,
- Figur 2:: eine Deckplatte von oben,
- Figur 3:: die Deckplatte aus Fig. 2 von unten,
- Figur 4:: eine erfindungsgemäße Trittplattenvorrichtung.

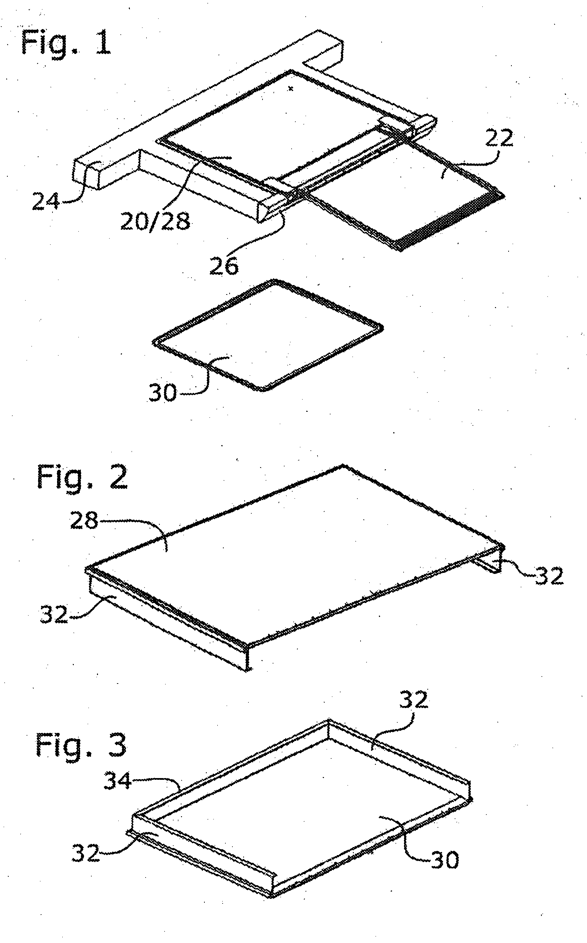

Figur 1 zeigt eine erfindungsgemäße Trittplattenvorrichtung 20 mit einer ausgefahrenen Trittplatte 22. Die Trittplattenvorrichtung 20 ist im eingebauten Zustand fahrzeugseitig in eine Art Rahmen 24 eingesetzt, der sich unterhalb einer nicht gezeigten Tür befindet. Die Trittplattenvorrichtung 20 funktioniert prinzipiell nach Art einer Schublade, die Trittplatte 22 wird ihr ein- oder ausgefahren.

Der Rahmen 24 weist eine Auflagetraverse 26 auf, auf der sich die Trittplattenvorrichtung 20 abstützt und die auf die Trittplattenvorrichtung 20 wirkende Kräfte, verursacht durch darüber laufende Personen, aufnimmt. Die Trittplattenvorrichtung 20 weist weiterhin eine begehbare Deckplatte 28 auf, die ebenfalls der Masse der benutzenden Personen standhält. Die Trittplatte 22 ist schwenkbar gelagert, so dass sie im ausgefahrenen Zustand zumindest abgesenkt, vorteilhafterweise aber auch nach oben geschwenkt werden kann.

Weiterhin ist eine demontierte bodenseitige Abdeckung 30 gezeigt, die im eingebauten Zustand unterhalb der Deckplatte 28 angeordnet ist und als Montageöffnung dient.

Figur 2 zeigt die Deckplatte 28 von oben, Fig. 3 zeit sie von unten. Erkennbar sind insbesondere Seitenteile 32, die im gezeigten Ausführungsbeispiel über ein Rückteil 34 miteinander verbunden sind. Die Seitenteile 32 und auch das Rückteil 34 dienen der Versteifung der Deckplatte 28, der Montage am Rahmen 24 des Fahrzeugs sowie zur Befestigung von innen liegenden Bauteilen.

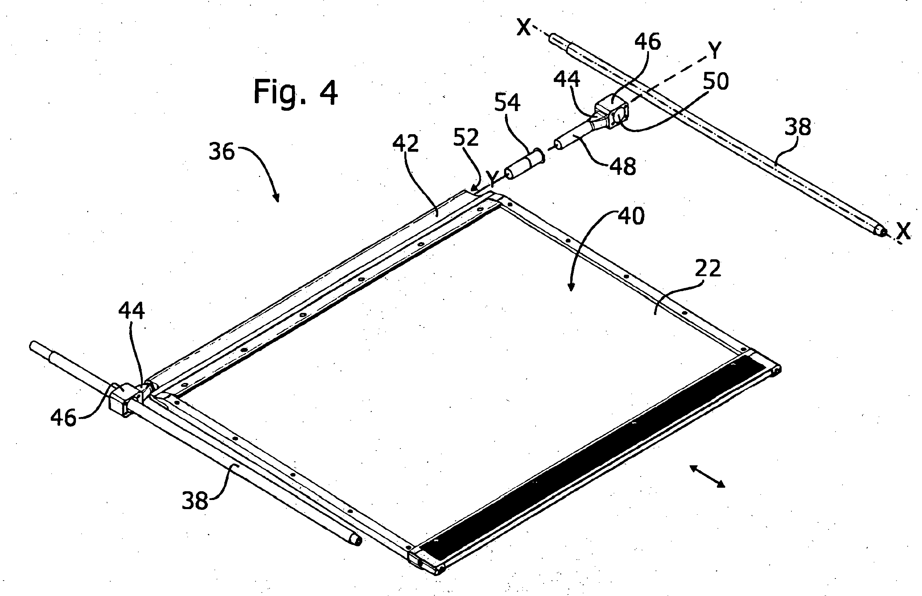

Fig. 4 zeigt eine erfindungsgemäße Trittplattenausfahrvorrichtung 36, die unterhalb der Deckplatte 28 montiert ist. Führungsmittel 38 erstrecken sich seitlich der Trittplatte 22 in Richtung der Ein-/Ausfahrrichtung (Pfeil). Die Führungsmittel 34 können als Spindelmuttern ausgeführt sein. In der gezeigten Ausführungsvariante ist die Trittplatte 22 durch eine Hauptplatte 40 und ein sich daran anschließendes Hinterkantenprofil 42 gebildet. Das Hinterkantenprofil 42 ist mit der Hauptplatte 40 beispielsweise verschraubt oder vernietet, es kann aber auch geklebt sein. Alternativ zur zweiteiligen Ausführung kann die Trittplatte 22 auch einteilig ausgebildet sein, ein separates Hinterkantenprofil 42 ist dann nicht notwendig.

Ein nicht gezeigter Elektromotor treibt die Führungsmittel 38 an. Es können beide Führungsmittel 38 angetrieben sein, es kann aber auch ausreichen, lediglich ein Führungsmittel 38 anzutreiben, während das andere Führungsmittel 38 lediglich der Führung und nicht der Kraftübertragung dient. Denkbar ist auch eine Ausführungsvariante, bei der nicht die Führungsmittel 38 selbst angetrieben werden, sondern ein zusätzlicher zentraler Antrieb für die Bewegung der Trittplatte 22 vorgesehen ist.

Führungselemente 44 bewirken die schwenkbare Lagerung der Trittplatte 22. Die Führungselemente 44 weisen einen Grundkörper 46 auf, der in einen Zapfenabschnitt 48 übergeht. Durch den Grundkörper 46 verläuft eine Öffnung 50, durch die sich im eingebauten Zustand jeweils ein Führungsmittel 38 erstreckt. Ist das Führungsmittel 38 als Spindelmutter ausgeführt, weist die Öffnung 50 ein entsprechendes Innengewinde auf.

Der Zapfenabschnitt 46 erstreckt sich im eingebauten Zustand der Trittplattenausfahrvorrichtung 20 seitlich in eine Aufnahmeöffnung 52 der Trittplatte 22 bzw. des Hinterkantenprofils 42 hinein. Somit ist die Trittplatte 22 um eine sich entlang der Längsachse des Zapfenabschnitts 48 erstreckende Achse Y-Y und sich entlang der Führungsmittel 34 erstreckende Achsen X-X schwenkbar.

Weiterhin zeigt Figur 4, dass eine Hülse 54 verwendbar ist, die in eine Aufnahmeöffnung 52 hineingesteckt werden kann, um selbst wiederum den Zapfenabschnitt 48 aufnehme zu können.

Die erfindungsgemäße Trittplattenvorrichtung 20 eignet sich insbesondere für eine Verwendung mit der beschriebenen Trittplattenausfahrvorrichtung 36, sie weist aber auch unabhängig von ihr wesentliche Vorteile auf, die mit jeder anderen Ausführung zum Tragen kommen.

## Patentansprüche

1. Trittplattenvorrichtung (20) mit einer Trittplatte (22) für einen Türeinstieg eines Personenbeförderungsfahrzeuges, wobei die Trittplatte (22) aus einer Ruhestellung in eine Gebrauchsstellung und zurück bewegbar ist,
**dadurch gekennzeichnet, dass**
eine begehbare Deckplatte (28), mit mindestens zwei Seitenteile (32), die sich in eine Ein-/Ausfahrrichtung der Trittplatte (22) erstrecken, und einem Rückteil (34), das sich quer dazu an einer Rückseite der Trittplattenvorrichtung (20) zwischen den Seitenteilen (22) erstreckt, vorgesehen ist, so dass die Trittplatte (22) in der Ruhestellung unterhalb der Deckplatte (28) und zwischen den Seitenprofilen angeordnet ist, und dass unterhalb der Deckplatte (28) angeordnete Bauteile an der Deckplatte (28) selbst oder an den Seitenteilen (32) und/oder dem Rückteil (34) der Deckplatte (28) befestigt sind, wobei Führungsmittel (38) vorgesehen sind, die jeweils seitlich der Trittplatte (22) in Ein-/Ausfahrrichtung verlaufen und die Trittplatte (22) über Führungselemente (44) mit den Führungsmitteln (38) derart verbunden ist, dass die Trittplatte (22) sowohl um Längsachsen (X-X), die in Längsrichtung der Führungsmittel (38) verlaufen, als auch entlang einer Längsachse (Y-Y), die durch die Führungselemente (44) und quer zu den Längsachsen (X-X) verläuft, schwenkbar ist.

2. Trittplattenvorrichtung (20) nach Anspruch 1,
**dadurch gekennzeichnet, dass**
weiterhin eine der Deckplatte (24) gegenüberliegende bodenseitige Abdeckung (30) vorgesehen ist, so dass die Trittplatte (22) in der Ruhestellung zwischen der Deckplatte (28), den Seitenteilen (32), dem Rückteil (34) und der bodenseitige Abdeckung (30) angeordnet ist.

3. Trittplattenvorrichtung (20) nach Anspruch 2,
**dadurch gekennzeichnet, dass**
die bodenseitige Abdeckung (30) als lösbare Montageabdeckung ausgeführt ist.

4. Trittplattenvorrichtung (20) nach einem der Ansprüche 1 bis 3,
**dadurch gekennzeichnet, dass**
die Deckplatte (28) eine Masse von mindestens 400 kg/m² tragen kann.

5. Trittplattenvorrichtung (20) nach Anspruch 4,
**dadurch gekennzeichnet, dass**
die Deckplatte (28) eine Masse von mindestens 550 kg/m² tragen kann.

6. Trittplattenvorrichtung (20) nach einem der Ansprüche 1 bis 5,
**dadurch gekennzeichnet, dass**
die Deckplatte (28) aus einem Kunststoff gefertigt ist.

7. Trittplattenvorrichtung (20) nach einem der Ansprüche 1 bis 6,
**dadurch gekennzeichnet, dass**
die Deckplatte (28) aus einem Metall gefertigt ist.

8. Trittplattenvorrichtung (20) nach einem der Ansprüche 1 bis 7,
**dadurch gekennzeichnet, dass**
die Führungselemente (44) jeweils aufweisen:
- einen Grundkörper (46) mit einer durchgehenden Öffnung (50), durch die sich jeweils ein Führungsmittel (34) erstreckt,
- einen sich an den Grundkörper (46) anschließenden Zapfenabschnitt (48), der sich in eine Aufnahmeöffnung (52) der Trittplatte (22) hineinerstreckt und in dieser in seiner Längsrichtung verschiebbar ist.

9. Trittplattenvorrichtung (20) nach Anspruch 8 oder 9,
**dadurch gekennzeichnet, dass**
die Trittplatte (22) durch eine Hauptplatte (40) und ein sich daran anschließendes Hinterkantenprofil (42) gebildet ist, wobei das Hinterkantenprofil (42) die Aufnahmeöffnungen (52) aufweist.

## Claims

1. A stepping plate device (20) with a stepping plate (22) for a door entrance of a passenger transport vehicle, the stepping plate (22) being movable from a rest position into a use position and back,
**characterized in that**
a step-on covering plate (28) is provided, with at least two lateral parts (32) extending in a retraction/extension direction of the stepping plate (22) and a rear part (34) extending transverse thereto on a rear side of the stepping plate device (20) between the lateral parts (22), so that the stepping plate (22) is disposed underneath the covering plate (28) and between the lateral profiles in the rest position, and that components disposed underneath the covering plate (28) are attached to the covering plate (28) itself or to the lateral parts (32) and/or the rear part (34) of the covering plate (28), wherein guide means (38) are provided that each extend laterally of the stepping plate (22) in the retraction/extension direction and the stepping plate (22) is connected, via guide members (44), to the guide means (38) in such a way that the stepping plate (22) is pivotable both about longitudinal axes (X-X) extending in the longitudinal direction of the guide means (38) as well as along a longitudinal axis (Y-Y) extending through the guide members (44) and transverse to the longitudinal axes (X-X).

2. The stepping plate device (20) according to claim 1,
**characterized in that**
further, a cover (30) at the bottom, disposed opposite the covering plate (24), is provided, so that the stepping plate (22) is disposed, in the rest position, between the covering plate (28), the lateral parts (32), the rear part (34) and the cover (30) at the bottom.

3. The stepping plate device (20) according to claim 2,
**characterized in that**
the cover (30) at the bottom is configured as a detachable assembly cover.

4. The stepping plate device (20) according to any one of the claims 1 to 3,
**characterized in that**
the covering plate (28) is capable of carrying a mass of at least 400 kg/m².

5. The stepping plate device (20) according to claim 4,
**characterized in that**
the covering plate (28) is capable of carrying a mass of at least 550 kg/m².

6. The stepping plate device (20) according to any one of the claims 1 to 5,
**characterized in that**
the covering plate (28) is made from a plastic.

7. The stepping plate device (20) according to any one of the claims 1 to 6,
**characterized in that**
the covering plate (28) is made from a metal.

8. The stepping plate device (20) according to any one of the claims 1 to 7,
**characterized in that**
the guide members (44) each comprise:
- a basic body (46) with a through-opening (50) through which one guide means (34), respectively, extends,
- a pin section (48) that adjoins the basic body (46) and extends into an accommodation opening (52) of the stepping plate (22) and is displaceable therein in its longitudinal direction.

9. The stepping plate device (20) according to claim 8 or 9,
**characterized in that**
the stepping plate (22) is formed by a main plate (40) and a rear-edge profile (42) adjoining thereto, with the rear-edge profile (42) comprising the accommodation openings (52).

## Revendications

1. Dispositif de marchepied (20) comprenant un marchepied (22) pour une entrée de porte d'un véhicule de transport en commun de personnes, dans lequel ledit marchepied (22) peut être déplacé depuis une position de repos dans une position d'utilisation et vice versa,
**caractérisé par le fait qu'**
une plaque de recouvrement (28) praticable ayant au moins deux parties latérales (32) qui s'étendent dans une direction d'escamotage/de déploiement du marchepied (22), et une partie arrière (34) qui s'étend transversalement par rapport à ceci sur une face arrière du dispositif de marchepied (20) entre lesdites parties latérales (22), est prévue, de sorte que ledit marchepied (22) est disposé, dans la position de repos, au-dessous de la plaque de recouvrement (28) et entre les profilés latéraux, et que des composants disposés au-dessous de la plaque de recouvrement (28) sont fixés sur la plaque de recouvrement (28) même ou sur lesdites parties latérales (32) et/ou ladite partie arrière (34) de la plaque de recouvrement (28), des moyens de guidage (38) étant prévus qui s'étendent chacun à côté du marchepied (22) dans la direction d'escamotage/de déploiement, et le marchepied (22) étant relié par des éléments de guidage (44) aux moyens de guidage (38) de telle sorte que le marchepied (22) peut pivoter aussi bien autour d'axes longitudinaux (X-X) qui s'étendent dans la direction longitudinale des moyens de guidage (38), que suivant un axe longitudinal (Y-Y) qui passe par les éléments de guidage (44) et s'étend transversalement aux axes longitudinaux (X-X).

2. Dispositif de marchepied (20) selon la revendication 1
**caractérisé par le fait que**,
en outre, une couverture côté fond (30) située en vis-à-vis de la plaque de recouvrement (24) est prévue de sorte que le marchepied (22) est disposé, dans la position de repos, entre ladite plaque de recouvrement (28), les parties latérales (32), ladite partie arrière (34) et ladite couverture côté fond (30).

3. Dispositif de marchepied (20) selon la revendication 2,
**caractérisé par le fait que**
ladite couverture côté fond (30) est réalisée en tant que couverture de montage amovible.

4. Dispositif de marchepied (20) selon l'une quelconque des revendications 1 à 3,
**caractérisé par le fait que**
ladite plaque de recouvrement (28) peut supporter une masse d'au moins 400 kg/m².

5. Dispositif de marchepied (20) selon la revendication 4,
**caractérisé par le fait que**
ladite plaque de recouvrement (28) peut supporter une masse d'au moins 550 kg/m².

6. Dispositif de marchepied (20) selon l'une quelconque des revendications 1 à 5,
**caractérisé par le fait que**
ladite plaque de recouvrement (28) est réalisée à partir d'une matière plastique.

7. Dispositif de marchepied (20) selon l'une quelconque des revendications 1 à 6,
**caractérisé par le fait que**
ladite plaque de recouvrement (28) est réalisée à partir d'un métal.

8. Dispositif de marchepied (20) selon l'une quelconque des revendications 1 à 7,
**caractérisé par le fait que**
lesdits éléments de guidage (44) présentent chacun:
- un corps de base (46) ayant une ouverture traversante (50) à travers laquelle s'étend respectivement un moyen de guidage (34),
- une portion de tenon (48) qui est contiguë audit corps de base (46) et qui s'étend dans une ouverture de réception (52) du marchepied (22) et peut coulisser dans sa direction longitudinale à l'intérieur de celle-ci.

9. Dispositif de marchepied (20) selon la revendication 8,
**caractérisé par le fait que**
le marchepied (22) est formé par une plaque principale (40) et un profilé de bord arrière (42) y contigu, ledit profilé de bord arrière (42) présentant les ouvertures de réception (52).
